# EUROPEAN PATENT SPECIFICATION

(11) **EP 3 391 749 B1**
(45) Date of publication and mention of the grant of the patent: **02.10.2019**
(21) Application number: 18163381.9
(22) Date of filing: 22.03.2018
(51) Int. Cl.: A21C 7/04

(54) **MACHINE FOR ROUNDING PORTIONS OF DOUGH**
MASCHINE ZUM RUNDWIRKEN VON TEIGSTÜCKEN
APPAREIL POUR ARRONDIR DES MORCEAUX DE PÂTE

(30) Priority: 30.03.2017 IT 201700034987
(43) Date of publication of application: 24.10.2018
(73) Proprietor: ING. POLIN & C. S.p.A., 37135 Verona (IT)
(72) Inventor: COMETTI, Cesare, 37135 VERONA (IT)
(74) Representative: Anselmi, Davide

(56) References cited:
- EP-A2- 1 922 932
- WO-A1-92/20495
- DE-A1- 10 107 406
- GB-A- 658 627
- US-A- 5 277 569
- US-A1- 2006 182 607

## Description

The present invention relates to the sector of machines for the food industry.

In particular, the present invention relates to a rounding machine for rounding portions of dough mixture, in particular for dough mixtures for the food industry (for example dough mixtures for bakery or pastry products).

There is a large variety of products in the food industry, especially baked products, which during the production cycle thereof require to be subjected to a step in which a number of ingredients are mixed together.

Needs linked to the volume of industrial production of these products obviously make it impossible, or at most not very practicable, to separately kneaded the single pieces.

The most obvious solution involves making large quantities of dough mixtures which are subdivided into the single portions before bringing the production process to its conclusion.

However, in order to facilitate the movement and logistical management of the single portions, after they have been separated from the mass of main dough mixture, it is particularly useful to round the single portions off into substantially a ball, shaped from the mass coming from the mixer.

Such devices are configured to reproduce, for example by means of a cam, the circular movement performed to create a piece of dough mixture that has a mainly spherical shape. The rounding is done using a plurality of forming elements, each designed to round a single piece of dough.

However, this type of solution is not free from a series of drawbacks which make rounding machines of known type poorly efficient.

Primarily the design complexity necessary for attaining a correct management of the movement of the machine makes it rigid and poorly versatile; for example, a simple change in portion size of the dough mixture to be processed might make it necessary to perform a fresh calibration of the machine.

Further, to generate the rotary movement, two possible embodiments are currently known: the first, illustrated for example in patent document DE10107406, includes using a two-cam structure, each cam being active on a different portion of a main plate to which the forming elements are constrained; the second, described in document IT1377437, includes obtaining the rotary movement by means of applying a relative motion between a plurality of guides to which the forming elements are constrained.

It is clear how the first solution leads to considerable complications of management: should it be necessary, due to production needs, modify the value of the cam, it would be necessary to operate on two different members.

However, even a slight error in calibration might easily lead to a de-alignment of the two cams, which might also cause the machine to break down once it is set in operation. Further, the embodiment structure is very complex and requires duplication of the majority of the components.

As regards the second solution, the presence of the two guides in continuous relative motion not only imposes a high mechanical stress on the machine but also makes it very noisy in use.

Further, it is worth considering that these solutions often do not include a system for varying the degree of eccentricity during the rounding of the single portions of dough mixture (in other words the eccentricity is fixed). Another apparatus for rouding dough portions is disclosed in EP1922932 A2.

In this context, the technical task underpinning the present invention is to provide a rounding machine which obviates at least some of the drawbacks in the prior art as described above.

In particular, an aim of the present invention is to make available a rounding machine having a high degree of efficiency, which is easy to handle and generates a low level of noise and mechanical stress in the machine.

A further object of the present invention is to make available a rounding machine which is versatile from a point of view of the variability of the degree of curvature during the rounding.

The stated technical task and specified objects are achieved by a rounding machine according to claim 1. Other optional embodiments of the invention are defined in the dependent claims. advantages of the present invention will become more apparent from the approximate and thus non-limiting description of a preferred, but not exclusive, embodiment of a rounding machine, as illustrated in the accompanying drawings, in which:
- figure 1 shows a perspective view of a rounding machine according to the present invention;
- figure 2 is a perspective view of several components of the present invention;
- figure 3 shows a section of the perspective view of figure 2;
- figure 4a shows in particular an operating configuration of the machine according to the present invention;
- figure 4b illustrates a further operating configuration of the rounding machine.

In the accompanying figures, reference numeral 10 denotes a rounding machine of portions of dough mixture, in particular for the food sector.

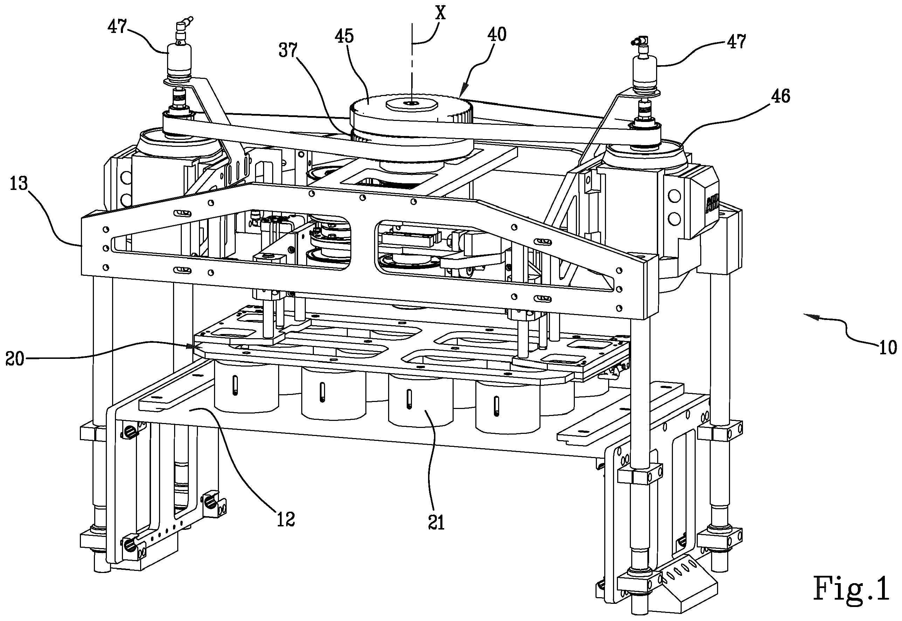

The rounding machine 10, as can be observed in figure 1, in particular comprises a bearing frame 11, a main plate 20, a central support 30 and an anti-rotation mechanism 40.

The bearing frame 11 has the function of a bearing structure and preferably comprises a support portion 12 configured to house at least a portion of a transport system, which could be for example a conveyor belt, to enable movement of the portions of dough mixture being processed.

The bearing frame 11 further comprises supports 13 able to directly or indirectly support, in a stable and secure way, the other components of the rounding machine above the support portion 12.

In particular, the main plate 20 is positioned above the support portion 12 and arranged parallel to it; a plurality of forming elements 21 are reversibly constrained to the plate 20, the forming elements 21 being configured each to engage a respective portion of dough mixture in order for it to be subjected to the rounding step.

The forming elements 21 can be made using a cup having a concavity facing downwards which houses a shaping disc connected to an elastic element which regulates the movement of the disc along a perpendicular direction with respect to the plane defined by the support portion 12.

It is advantageously possible to replace each forming element with another, provided with an elastic element having a different elastic modulus, as a function of the mechanical characteristics and the quantity of dough mixture which is to be processed.

The main plate 20 is connected to the bearing frame 11, and in particular entirely suspended on the bearing frame 11, by means of the central support 30. In greater detail, as will be more fully described in the following, the main plate 20 is entirely suspended on the bearing frame 11 exclusively by means of the central support 30.

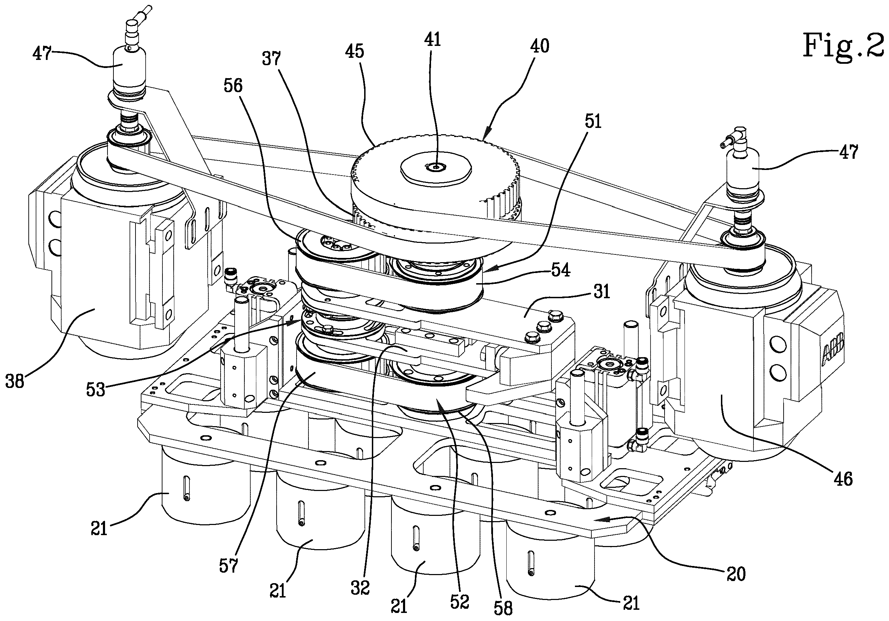

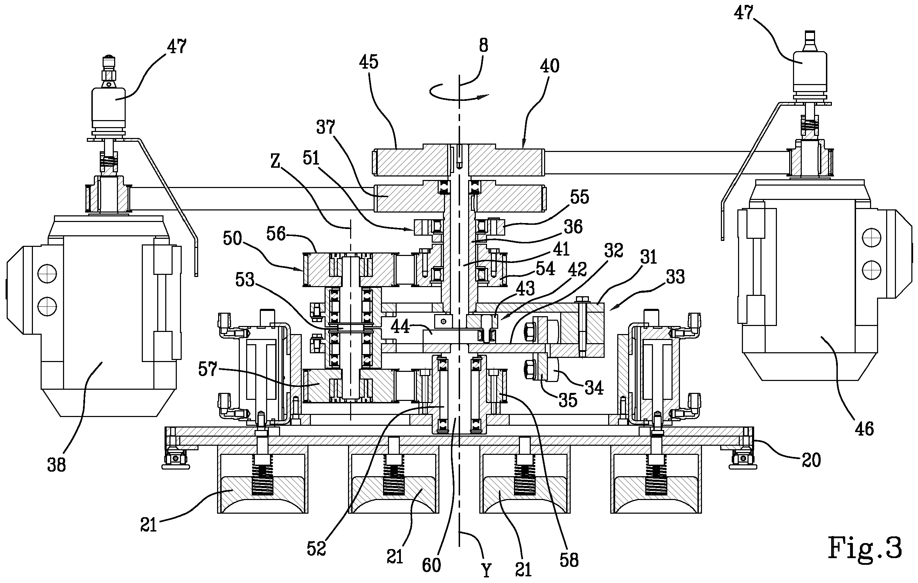

The present method 30, according to the present invention, illustrated in greater detail in figures 2 and 3, is thus mounted on the bearing frame 11 (at an upper part of the central support 30) and connected to the main plate 20.

In particular, the central support 30 is configured to translate the main plate 20 according to an eccentric trajectory about a first stationary axis "X" and is rotatably connected to the main plate 20, preferably idle, by use of bearings, about a second axis "Y" of rotation parallel to said first axis "X". The trajectory is preferably circular and centred on the first axis "X", advantageously adjustably in order to vary the width, as will be described in the following.

Note that the term "stationary" is taken to mean that the first axis "X" is fixed during a normal operating cycle of the rounding machine 10, however alternatively adjustment and/or calibrating operations can be carried out with the aim of modifying and optimising the positioning of the first axis "X" while the machine 10 is not operating.

In a preferred embodiment, illustrated by way of non-limiting example in the accompanying drawings, the central support 30 comprises a first arm 31 rotatable about the first axis "X" and a second arm 32 connected to the main plate 20 rotatably about the second axis "Y".

The two arms 31, 32, are connected to one another reciprocally rotatably about a hinge axis "Z", so as to vary the eccentricity width of the trajectory followed in use by the main plate 20.

In other words, the relative rotation of an arm with respect to the other arm causes a de-alignment of the first axis "X" about which the first arm 31 is rotatable, with respect to the second axis "Y" about which the second arm 32 is rotatable, generating (as the first axis "X" is stationary) a cam which enables obtaining the operating eccentric trajectory followed by the main plate 20 during the rounding operations of a portion of dough mixture.

Each arm 31, 32 preferably has a first end that is rotatable about the hinge axis "Z" and a second end, opposite the first end, provided with slidable support means 33, preferably revolving, which define a rest along a parallel direction to the hinge axis "Z".

In a preferred embodiment, the slidable support means 33 are obtained by rollers 34, rotatably connected to a wall 35, which extend away from the second end of the second arm 32, and which are active on an expansion of the second end of the first arm 31.

The above-described characteristics are obtainable in a particularly efficient and easy way for example by obtaining the first and second arm 31, 32 by means of a respective manoeuvring plate, arranged in a parallel plane to the main plate 20.

To guarantee an optimal balancing of the machine, especially when in use, the arms 31 and 32 have rotatable central portions, respectively about the first axis "X" and the second axis "Y".

In other words, the arms 31, 32 have the respective rotation centre corresponding to a respective axis, which is thus positioned in a central portion of the arm and which preferably subdivides the arms into two symmetrical portions or in any case portions substantially having similar length for reasons of balancing.

The first arm 31 is solidly constrained to a respective transmission shaft 36, coaxial to the first axis "X". The transmission shaft 36 is solidly connected, at an upper end thereof, to a respective transmission pulley 37 activated by a respective motor 38.

The central support 30 further comprises an adjustment mechanism 40 active between said arms 31, 32 for varying a reciprocal angular position of the arms about said hinge axis "Z" so as to vary the amount of the eccentricity width of the eccentric trajectory of the main plate 20 about the first axis "X".

In other words, the adjustment mechanism 40 enables controlling and setting the de-alignment of the second axis "Y" about which the second arm 32 is rotatable, with the first axis "X" about which the first arm 31 is rotatable, generating the cam which determines the eccentric trajectory followed by the main plate 20 when the machine 10 is in use. It is hypothetically possible to eliminate the eccentricity when it is necessary to halt the oscillation movement of the main plate 20 bringing the two axes, "X" and "Y", into reciprocal alignment.

The adjustment mechanism 40 preferably comprises a control shaft 41 that is rotatable about the first axis "X", coaxially thereto, and interconnected to the second arm 32 by means of a cam connection 42.

The cam connection can be obtained by a pin 43 that is eccentric with respect to the first axis "X" and a sliding guide 44 inside which the eccentric pin 43 slides.

The cam connection 42 is interposed between the first axis "X" and the second axis "Y".

According to a preferred embodiment, the pin 43 is connected to the control shaft 41 at a lower end thereof by means of a rod, while the sliding guide 44 is constrained to the second arm 32.

The guide 44 can be for example made in the form of a linear guide formed by two strips stably constrained, for example by screwing, to the second arm 32 and orientated radially with respect to the hinge axis "Z", in such a way as to define between them a linear seat, radially arranged with respect to the hinge axis "Z" inside which the pin 28 can slide.

It is however possible to obtain the cam connection 42 in a different way; for example, in a further embodiment not illustrated in the appended drawings it would be possible to obtain a pin 38 connected to the second arm 32 and to constrain the sliding guide 44 stably to the control shaft 41.

The control shaft 41 is solidly connected, at an upper end thereof, to a respective control pulley 45 activated by a respective motor 46.

In a possible embodiment, shown in the appended images, the transmission shaft 36 is hollow, so that the control shaft 41 can be housed inside it; it follows that the relative pulleys, i.e. the transmission pulley 37 and the control pulley 45 are arranged superposed, coaxial and spaced along the first axis "X".

The rounding machine 10 further comprises a control system acting on the motors 38 and 46 to set at least a rotation velocity of each motor in such a way that, when the operation in progress requires the main plate 20 to maintain an operating trajectory with a stationary eccentricity, the control shaft 41 and the transmission shaft 36 to rotate at the same velocity.

When on the other hand it is desired to modify the eccentricity of the trajectory followed by the main plate 20, it is sufficient to temporarily vary the relative angular velocity between the control shaft 41 and the transmission shaft 36, so as to generate a sliding of the pin 43 inside the sliding guide 44 determining a de-alignment of the arms 31, 32 and consequently of the second axis "Y" with respect to the first axis "X", up to reach the desired eccentricity value.

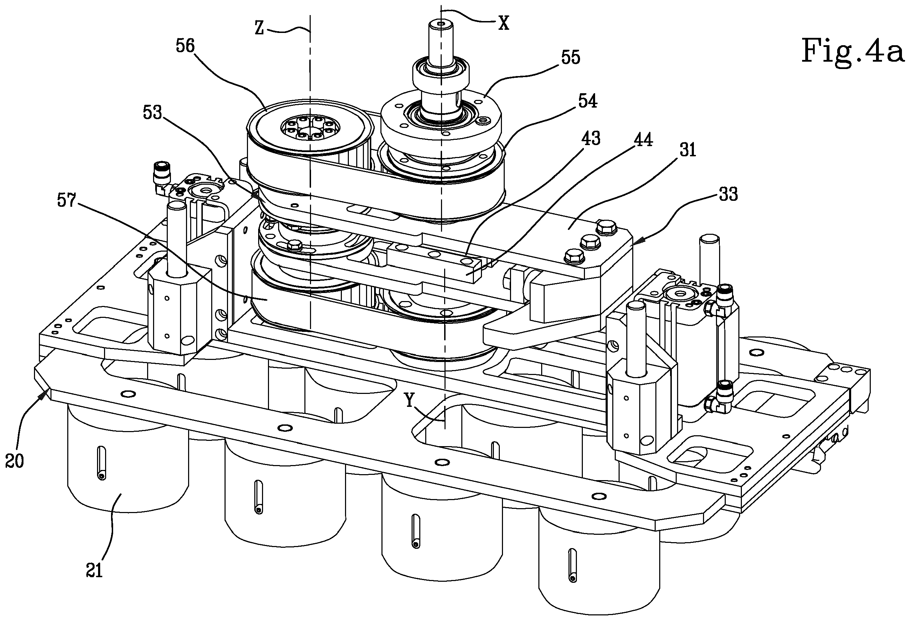

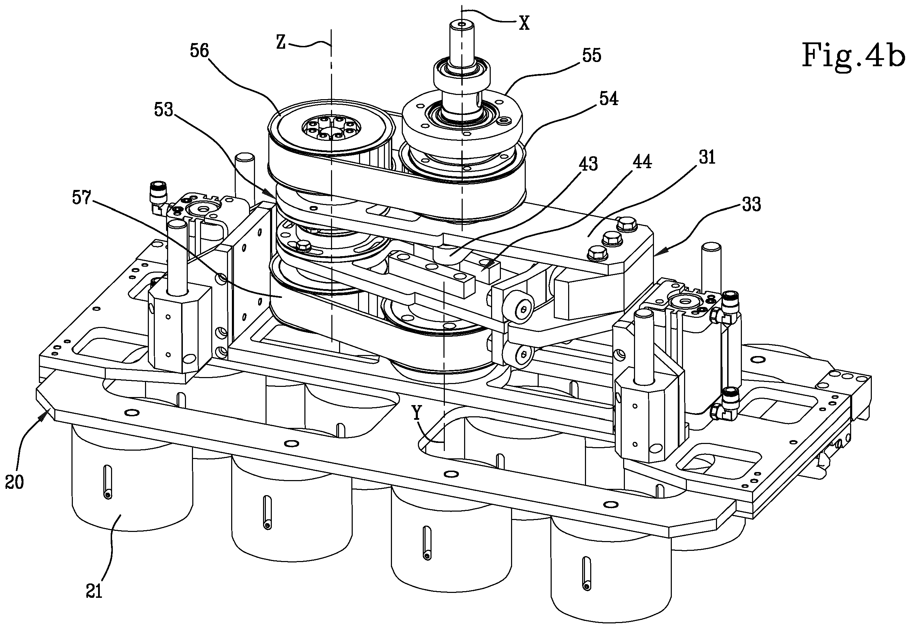

In particular: in figures 4a and 4b two different operating configurations are illustrated, characterised by different eccentricity values: figure 4a in particular illustrates the cam connection 42; in which the first axis "X" is coaxial to the second axis "Y".

In this situation, in use, the main plate 20 is stationary (notwithstanding the fact that the two shafts 31, 32 are rotating, in particular at the same angular velocity), as the cam is nil; however it is sufficient to modify the angular velocity, for example, of the control pulley 45 with respect to the angular velocity of the transmission pulley 37, to set off a sliding of the pin 43 along the seat defined by the sliding guide 44, in order to obtain the configuration illustrated in detail in figure 4b.

As can be observed in figure 4b, the sliding of the pin 43 forces a rotation of the second arm 32 with respect to the first arm 31 about the hinge axis "Z", causing the de-alignment of the second axis "Y" with respect to the first axis "X" thus generating a cam value that is greater than zero, resulting in the eccentric translating motion of the main plate 20 about the first axis "X". This trajectory, in stationary condition of the eccentricity, is obviously circular.

With the aim of guaranteeing a correct and efficient management of the adjustment mechanism 40 of the cam, the control system further comprises, for each of the motors 38, 46, an angular position sensor 47, configured to detect, preferably continuously, the absolute angular positioning of each motor 38, 46.

The control system is further configured to calculate, on the basis of values of angular position detected by each sensor 47, a value of reciprocal angular position between the control shaft 41 and the transmission shaft 36 and/or the eccentricity value of the trajectory of the main plate, at each single instant. The eccentricity value is in fact univocally correlated to the angular displacement between the two shafts 31, 32.

The adjustment mechanism 40 of the cam according to the present invention advantageously enables modifying the eccentricity of the operating trajectory followed by the main plate 20 even when the rounding machine 10 is in use, as it is sufficient to vary the relative velocity imposed by the two motors 38, 46 on the respective pulleys in order to dynamically vary the eccentricity, without it being necessary to stop the machine in order to modify it.

To prevent the main plate 20 from rotating about the second axis "Y" and so that it follows only the translating motion about the first axis "X", the rounding machine 10 further comprises an anti-rotation mechanism 50.

The anti-rotation mechanism 50, in particular, exploits the fact that the main plate 50 is mounted idle on the lower end of the central support 30.

In this situation, in fact, any absolute rotation movement of the main plate 20 can be annulled, giving the main plate a movement of pure translation on a circular and/or eccentric trajectory about the first axis "X".

According to the invention, the anti-rotation mechanism 50 comprises a reference member 51, rigidly connected to the bearing frame 11 of the rounding machine 10, a driven member 52 rigidly connected to the main plate 20 and a transmission mechanism 53 interposed between the reference member 51 and the driven member 52 for maintaining the driven member 52 non-rotational during the operation of the machine 10.

According to the invention, the anti-rotation mechanism 50 is interposed between the bearing frame 11 and the main plate 20 and is suspended (preferably entirely suspended) on the central support 30. According to the invention, the anti-rotation mechanism 50 is mechanically connected to the driven member 52 so as to maintain it non-rotational during the operation of the machine 10.

In particular, the anti-rotation mechanism 50 is mounted between the first axis "X" and the second axis "Y". The anti-rotation mechanism 50 is preferably mounted between the transmission shaft 36 and the driven member 52.

The cam connection 44 is preferably vertically distanced from the main plate 20. In detail, the driven member 52 is arranged between the cam connection 44 and the main plate 20.

In particular, the reference member 51 comprises a first pulley 54 arranged about the first axis "X" and rotationally solid with a support 55 constrained to the bearing frame 11 which makes the first pulley 54 non-rotational with respect to the first axis "X".

The transmission mechanism 53 comprises a second 56 and a third pulley 57 arranged coaxially about a third axis parallel to the first and the second axis "X", "Y". The third axis preferably coincides with the hinge axis "Z".

The third axis is parallel and permanently de-aligned with respect to the first and second axis "X", "Y". The particular embodiment structure of the rounding machine 10 according to the present invention is such that the distance between the first axis "X" and the third axis is fixed, as the distance between the second axis "Y" and the third axis is fixed; these distances are imposed by respective shafts applied to the arms 31, 32.

The driven member 52 comprises a fourth pulley 58 arranged about the second axis "Y" and solidly constrained in rotation with respect to the main plate 20 about the second axis "Y", by means of a sleeve 59 associated, by means of bearings, to a portion 60 of the second arm 32 extending along the second axis "Y".

In particular, the second pulley 56 and the third pulley 57 are solidly constrained in rotation about the third axis and are connected, by means of respective transmission members, preferably toothed belts, respectively to the first pulley 45 and the fourth pulley 58.

The machine 10 of the present invention advantageously enables obtaining a circular rounding movement with a simple and easily-adjustable structure: the absence of the guides for constraining the main plate 20 to carry out a purely translating movement guarantees a greater stability and resistance, reducing the mechanical stress to which the machine 10 is subjected.

The particular embodiment of the central support 30 allowing to have a single cam obtained by means of a single support frame guarantees a more precise, faster and more efficient calibration.

The particular adjustment mechanism for adjusting the cam 40 according to the present invention advantageously enables obtaining a machine 10 offering the possibility to modify the eccentricity of the operating trajectory even when the machine is in use, simply by modifying the angular velocity relative to the control pulley 45 with respect to the angular velocity of the transmission pulley 37, or vice versa.

Thanks to this characteristic it is possible to make the central plate also follow a spiral trajectory, in this way enabling a better result to be obtained.

## Claims

1. A rounding machine of portions of dough mixture, in particular in the food sector, comprising:
- a bearing frame (11);
- a main plate (20) supporting, on a lower face thereof, a plurality of forming elements (21) each for engaging a respective portion of dough mixture;
- a central support (30) for movement, mounted on said bearing frame (11) and connected to said main plate (20), said central support (30) being configured for moving said main plate (20) according to an eccentric trajectory about a first stationary axis (X); said central support (30) being further rotatably connected to the main plate (20) idle about a second axis (Y) of rotation parallel to said first axis (X);
- an anti-rotation mechanism (50) configured to prevent a rotation of the main plate (20), constraining the main plate (20) to a translation movement along said eccentric trajectory about the first axis (X);
**characterised in that** said anti-rotation mechanism (50) is entirely suspended on the central support (30) and is interposed between the frame (11) and the main plate (20); said anti-rotation mechanism (50) comprises a reference member (51), rigidly connected to the frame (11) of the machine, a driven member (52) rigidly connected to the main plate (20) and a transmission mechanism interposed between said reference member (51) and driven member (52) for maintaining said driven member (52) non-rotational during an operational functioning of the machine, said transmission mechanism being supported by the central support (30).

2. The machine according to claim 1, wherein said reference member (51) comprises a first pulley (54) arranged about said first axis (X) and non-rotational about the first axis (X), wherein said transmission mechanism comprises a second (56) and a third pulley (57) arranged coaxially about a third axis parallel to the first and the second axis (Y), and wherein said driven member (52) comprises a fourth pulley (58) arranged about the second axis (Y) and solidly constrained in rotation with respect to the main plate (20) about the second axis (Y); said second and third pulley (57) being solidly constrained in rotation about the third axis and being connected, by means of respective transmission members, in particular toothed belts, respectively to the first pulley (54) and the fourth pulley (58).

3. The machine according to one or more of the preceding claims, wherein the central support (30) comprises a first arm (31) rotatable about the first axis (X) and a second arm (32) connected to the main plate (20) rotatably about the second axis (Y), and wherein said first and second arm (32) are reciprocally rotatable about a hinge axis (Z) parallel to the first and second axis (Y) for varying the eccentricity width of said eccentric trajectory of the main plate (20).

4. The machine according to claim 3, when dependent on claim 2, wherein said hinge axis (Z) coincides with said third axis.

5. The machine according to claim 4, wherein said first and second arm (32) each have a first end that is rotatable about said third axis and a second end, opposite the first end, provided with slidable support means (33), preferably revolving, defining a rest along a parallel direction to said third axis, and wherein said first and second arm (32) have respective rotatable central portions, respectively rotatable about said first and second axis (Y).

6. The machine according to any one of the preceding claims from 3 to 5, wherein each arm is defined by a manoeuvring plate lying in a plane parallel to the main plate (20).

7. The machine according to any one of the preceding claims from 3 to 6, wherein said central support (30) further comprises an adjustment mechanism (40) active between said arms for varying a reciprocal angular position (45) of said arms about said hinge axis so as to vary the amount of the eccentricity width of said eccentric trajectory of the main plate (20) about the first axis (X).

8. The machine according to claim 7, wherein said adjustment mechanism (40) comprises a control shaft (41) that is rotatable about the first axis (X), coaxially thereto, and is interconnected to the second arm (32) of the central support (30) by means of a cam connection (42).

9. The machine according to claim 8, wherein said cam connection (42) comprises a pin (43) that is eccentric with respect to the first axis (X) and a sliding guide (44) for said eccentric pin (43).

10. The machine according to claim 8 or 9, wherein said control shaft (41) is solidly connected, at an upper end thereof, to a respective control pulley (45) activated by a respective motor (46).

11. The machine according to any one of the preceding claims from 3 to 10, wherein said first arm (31) is solidly constrained to a respective transmission shaft (36), and wherein said transmission shaft (36) is solidly connected, at an upper end thereof, to a respective transmission pulley (37) activated by a respective motor (38).

12. The machine according to claim 11, when dependent on claim 8, wherein said transmission shaft (36) is hollow and is arranged externally of said control shaft (41) and wherein said control pulley and said transmission pulley are superposed and spaced along said first axis (X).

13. The machine according to claim 12, further comprising: a control system acting on said motors (38, 46) for setting at least a rotation velocity of each motor (38, 46), and wherein said control system is configured for setting respective rotation velocities of each motor (38, 46) so that:
- the control shaft (41) and the transmission shaft (36) rotate at a same angular velocity about the first axis (X) when a movement of the main plate (20) is requested with a stationary eccentricity; and/or so that
- the control shaft (41) and the transmission shaft (36) rotate at different angular velocities for a predetermined time that is sufficient for varying the eccentricity of the trajectory of the main plate (20) about the first axis (X), the angular velocities of the control shaft (41) and the transmission shaft (36) being subsequently returned to an equal value when the desired eccentricity has been reached.

14. The machine according to claim 13, wherein said control system further comprises, for each of said motors (38, 46), an angular position sensor (45) configured for detecting the absolute angular positioning of each motor (38, 46), and wherein said control system is configured for calculating, on the basis of values of angular position (45) detected by each sensor, a value of reciprocal angular position (45) between the control shaft (41) and the transmission shaft (36) and/or the eccentricity of the trajectory of the main plate (20).

## Patentansprüche

1. Maschine zum Rundwirken von Stücken einer Teigmischung, insbesondere im Nahrungsmittelbereich, umfassend:
- ein Tragegestell (11);
- eine Hauptplatte (20), die an einer unteren Seitenfläche eine Vielzahl an Formungselementen (21) trägt, von denen ein jedes mit einem jeweiligen Stück einer Teigmischung in Eingriff gelangt;
- eine mittige Halterung (30) für die Bewegung, die am Tragegestell (11) montiert und mit der Hauptplatte (20) verbunden ist, wobei die mittige Halterung (30) ausgelegt ist, um die Hauptplatte (20) gemäß einer außermittigen Bahnkurve um eine erste stationäre Achse (X) zu bewegen, wobei die mittige Halterung (30) zudem verbunden mit der Hauptplatte (20) frei laufend um eine zweite Rotationsachse (Y) drehbar ist, die parallel zur ersten Achse (X) angeordnet ist;
- einen Drehsicherungsmechanismus (50), der ausgelegt ist, um eine Drehung der Hauptplatte (20) zu verhindern und die Hauptplatte (20) zu einer Verschiebebewegung entlang der außermittigen Bahnkurve um die erste Achse (X) zwingt,
**dadurch gekennzeichnet, dass** der Drehsicherungsmechanismus (50) vollumfänglich schwebend auf der mittigen Halterung (30) gelagert und zwischen dem Gestell (11) und der Hauptplatte (20) eingesetzt ist, wobei der Drehsicherungsmechanismus (50) ein Referenzelement (51) umfasst, das steif mit dem Gestell (11) der Maschine verbunden ist, ein angetriebenes Element (52), das steif mit der Hauptplatte (20) verbunden ist, und ein Antriebselement, das zwischen dem Referenzelement (51) und dem angetriebenen Element (52) eingesetzt ist, um dafür zu sorgen, dass das angetriebene Element (52) während eines Betriebsmodus der Maschine nicht drehend beibehalten wird, wobei der Antriebsmechanismus von der mittigen Halterung (30) getragen wird.

2. Maschine nach Anspruch 1, wobei das Referenzelement (51) eine erste Riemenscheibe (54) umfasst, die um die erste Achse (X) angeordnet ist und sich nicht um die erste Achse (X) dreht, wobei der Antriebsmechanismus eine zweite (56) und eine dritte Riemenscheibe (57) umfasst, koaxial um eine dritte Achse angeordnet, die parallel zur ersten und zur zweiten Achse (Y) verläuft, und wobei das angetriebene Element (52) eine vierte Riemenscheibe (58) umfasst, die um die zweite Achse (Y) und in Drehung fest verbunden zur Hauptplatte (20) um die zweite Achse (Y) angeordnet ist, wobei die zweite und die dritte Riemenscheibe (57) in Drehung fest um die dritte Achse verbunden und mittels jeweiliger Antriebselemente, insbesondere Zahnriemen, jeweils an die erste Riemenscheibe (54) und die vierte Riemenscheibe (58) angeschlossen sind.

3. Maschine nach einem oder mehreren der vorhergehenden Ansprüche, wobei die mittige Halterung (30) einen ersten Arm (31) umfasst, der um die erste Achse (X) drehbar ist, und einen zweiten Arm (32), der mit der Hauptplatte (20) drehbar um die zweite Achse (Y) verbunden ist, wobei der erste und der zweite Arm (32) gegenseitig um eine Scharnierachse (Z) drehbar sind, parallel zur ersten und zur zweiten Achse (Y), um die Exzentrizitätsbreite der außermittigen Bahnkurve der Hauptplatte (20) zu variieren.

4. Maschine nach Anspruch 3, wenn abhängig von Anspruch 2, wobei die Scharnierachse (Z) mit der dritten Achse übereinstimmt.

5. Maschine nach Anspruch 4, wobei der erste und der zweite Arm (32) jeweils ein erstes Ende aufweisen, das um die dritte Achse drehbar ist, und ein zweites Ende, das gegenständig zum ersten Ende angeordnet ist, versehen mit verschiebbaren Halterungsmitteln (33), vorzugsweise rotierend, definierend einen Anschlag entlang einer parallelen Richtung zur dritten Achse, und wobei der erste und der zweite Arm (32) jeweilige drehbare mittige Abschnitte aufweisen, die jeweils um die erste und die zweite Achse (Y) drehbar sind.

6. Maschine nach einem der vorhergehenden Ansprüche 3 bis 5, wobei ein jeder Arm von einer Manövrierplatte definiert ist, die in einer Ebene liegt, die parallel zur Hauptplatte (20) angeordnet ist.

7. Maschine nach einem der vorhergehenden Ansprüche 3 bis 6, wobei die mittige Halterung (30) zudem einen Verstellmechanismus (40) umfasst, der zwischen den Armen wirkt, um eine gegenseitige Winkelposition (45) der Arme um die Scharnierachse zu variieren, sodass die Menge der Exzentrizitätsbreite der außermittigen Bahnkurve der Hauptplatte (20) um die erste Achse (X) variiert wird.

8. Maschine nach Anspruch 7, wobei der Verstellmechanismus (40) eine Steuerwelle (41) umfasst, die um die erste Achse (X) koaxial zu dieser drehbar und mit dem zweiten Arm (32) der mittigen Halterung (30) mittels einer Nockenverbindung (42) verbunden ist.

9. Maschine nach Anspruch 8, wobei die Nockenverbindung (42) einen Bolzen (43) umfasst, der zur ersten Achse (X) exzentrisch ist, und eine Gleitführung (44) für den Exzenterbolzen (43).

10. Maschine nach Anspruch 8 oder 9, wobei die Steuerwelle (41) an einem oberen Ende davon fest mit einer jeweiligen Steuerriemenscheibe (45) verbunden ist, die von einem jeweiligen Motor (46) aktiviert wird.

11. Maschine nach einem der vorhergehenden Ansprüche 3 bis 10, wobei der erste Arm (31) fest mit einer jeweiligen Antriebswelle (36) verbunden ist und wobei die Antriebswelle (36) fest an einem oberen Ende davon an eine jeweilige Antriebsriemenscheibe (37) angeschlossen ist, die von einem jeweiligen Motor (38) aktiviert wird.

12. Maschine nach Anspruch 11, wenn abhängig von Anspruch 8, wobei die Antriebswelle (36) hohl und außenseitig der Steuerwelle (41) angeordnet ist, und wobei die Steuerriemenscheibe und die Antriebsriemenscheibe übereinander angeordnet und entlang der ersten Achse (X) beabstandet sind.

13. Maschine nach Anspruch 12, zudem umfassend ein Steuerungssystem, das auf die Motoren (38, 46) wirkt, um mindestens eine Drehzahl eines jeden Motors (38, 46) festzulegen, und wobei das Steuerungssystem ausgelegt ist, um jeweilige Drehzahlen eines jeden Motors (38, 46) festzulegen, sodass
- die Steuerwelle (41) und die Antriebswelle (36) sich bei derselben Winkelgeschwindigkeit um die erste Achse (X) drehen, wenn eine Bewegung der Hauptplatte (20) mit einer stationären Exzentrizität erforderlich ist, und/oder sodass
- die Steuerwelle (41) und die Antriebswelle (36) sich für einen vorgegebenen Zeitraum, der ausreichend ist, um die Exzentrizität der Bahnkurve der Hauptplatte (20) um die erste Achse (X) zu variieren, bei unterschiedlichen Winkelgeschwindigkeiten drehen, wobei die Winkelgeschwindigkeit der Steuerwelle (41) und der Antriebswelle (36) anschließend wieder auf einen gleichen Wert zurückgestellt werden, wenn die gewünschte Exzentrizität erzielt wurde.

14. Maschine nach Anspruch 13, wobei das Steuerungssystem zudem für einen jeden der Motoren (38, 46) einen Winkelpositionssensor (45) umfasst, der ausgelegt ist, um die absolute Winkelpositionierung eines jeden Motors (38, 46) zu erfassen, und wobei das Steuerungssystem ausgelegt ist, um auf Basis von Werten der Winkelposition (45), die von einem jeden Sensor erfasst wurden, einen Wert einer gegenseitigen Winkelposition (45) zwischen der Steuerwelle (41) und der Antriebswelle (36) und/oder die Exzentrizität der Bahnkurve der Hauptplatte (20) zu berechnen.

## Revendications

1. Machine pour arrondir des morceaux de mélange de pâte, en particulier dans le secteur de l'alimentation, comprenant :
- un châssis de support (11) ;
- une plaque principale (20) supportant, sur son côté inférieur, une pluralité d'éléments de formation (21) chacun se mettant en prise avec un morceau respectif de mélange de pâte ;
- un support central (30) de déplacement, monté sur ledit châssis de support (11) et relié à ladite plaque principale (20), ledit support central (30) étant configuré pour déplacer ladite plaque principale (20) selon une trajectoire excentrique autour d'un premier axe stationnaire (X) ; ledit support central (30) étant de plus relié de façon rotative à la plaque principale (20) inactive autour d'un second axe (Y) de rotation parallèle au dit premier axe (X) ;
- un mécanisme antirotation (50) configuré pour empêcher une rotation de la plaque principale (20), contraindre la plaque principale (20) à un mouvement de translation le long de ladite trajectoire excentrique autour du premier axe (X) ;
**caractérisée en ce que** ledit mécanisme antirotation (50) est entièrement suspendu sur le support central (30) et est interposé entre le châssis (11) et la plaque principale (20) ; ledit mécanisme antirotation (50) comprend un organe de référence (51) relié rigidement au châssis (11) de la machine, un organe d'entraînement (52) relié rigidement à la plaque principale (20) et un mécanisme de transmission interposé entre ledit organe de référence (51) et l'organe d'entraînement (52) pour maintenir ledit organe d'entraînement (52) non rotatif pendant un fonctionnement opérationnel de la machine, ledit mécanisme de transmission étant supporté par le support central (30).

2. Machine selon la revendication 1, dans laquelle ledit organe de référence (51) comprend une première poulie (54) disposée autour dudit premier axe (X) et non rotative autour du premier axe (X), dans laquelle ledit mécanisme de transmission comprend une seconde (56) et une troisième poulie (57) disposées coaxialement autour d'un troisième axe parallèle au premier et au second axe (Y), et dans laquelle ledit organe d'entraînement (52) comprend une quatrième poulie (58) disposée autour du second axe (Y) et solidaire en rotation par rapport à la plaque principale (20) autour du second axe (Y) ; lesdites seconde et troisième poulies (57) étant solidaires en rotation autour du troisième axe et étant reliées, au moyen d'organes de transmission respectifs, en particulier des courroies dentées, respectivement à la première poulie (54) et à la quatrième poulie (58).

3. Machine selon l'une ou plusieurs des revendications précédentes, dans laquelle le support central (30) comprend un premier bras (31) pouvant tourner autour du premier axe (X) et un second bras (32) relié à la plaque principale (20) pouvant tourner autour du second axe (Y), et dans laquelle lesdits premier et second bras (32) peuvent tourner réciproquement autour d'un axe d'articulation (Z) parallèle aux premier et second axes (Y) pour varier la largeur d'excentricité de ladite trajectoire excentrique de la plaque principale (20) .

4. Machine selon la revendication 3, lorsqu'elle dépend de la revendication 2, dans laquelle ledit axe d'articulation (Z) coïncide avec ledit troisième axe.

5. Machine selon la revendication 4, dans laquelle lesdits premier et second bras (32) comportent une première extrémité pouvant tourner autour dudit troisième axe et une seconde extrémité, opposée à la première extrémité, pourvue de moyens de support (33) coulissant, de préférence pivotant, définissant un appui le long d'une direction parallèle au dit troisième axe, et dans laquelle lesdits premier et second bras (32) comportent des parties centrales rotatives respectives, pouvant tourner respectivement autour desdits premier et second axe (Y).

6. Machine selon l'une quelconque des revendications précédentes de 3 à 5, dans laquelle chaque bras est défini par une plaque de manoeuvre reposant dans un plan parallèle à la plaque principale (20).

7. Machine selon l'une quelconque des revendications précédentes de 3 à 6, dans laquelle ledit support central (30) comprend de plus un mécanisme de réglage (40) actif entre lesdits bras pour varier une position angulaire (45) réciproque desdits bras autour dudit axe d'articulation de sorte à varier la quantité de largeur d'excentricité de ladite trajectoire excentrique de la plaque principale (20) autour du premier axe (X).

8. Machine selon la revendication 7, dans laquelle ledit mécanisme de réglage (40) comprend un arbre de commande (41) pouvant tourner autour du premier axe (X) coaxialement à celui-ci, et étant relié au second bras (32) du support central (30) au moyen d'un raccordement à came (42) .

9. Machine selon la revendication 8, dans laquelle ledit raccordement à came (42) comprend une cheville (43) étant excentrique par rapport au premier axe (X) et à un guide coulissant (44) pour ladite cheville excentrique (43).

10. Machine selon la revendication 8 ou 9, dans laquelle ledit arbre de commande (41) est relié solidement, à son extrémité supérieure, à une poulie de commande (45) respective activée par un moteur (46) respectif.

11. Machine selon l'une quelconque des revendications précédentes de 3 à 10, dans laquelle ledit premier bras (31) est solidaire d'un arbre de transmission (36) respectif, et dans laquelle ledit arbre de transmission (36) est relié solidement, à son extrémité supérieure, à une poulie de transmission (37) respective activée par un moteur (38) respectif.

12. Machine selon la revendication 11, lorsqu'elle dépend de la revendication 8, dans laquelle ledit arbre de transmission (36) est creux et est disposé extérieurement au dit arbre de commande (41) et dans laquelle ladite poulie de commande et ladite poulie de transmission sont superposées et espacées le long dudit premier axe (X).

13. Machine selon la revendication 12, comprenant de plus un système de commande agissant sur lesdits moteurs (38, 46) pour fixer au moins une vitesse de rotation de chaque moteur (38, 46), et dans laquelle ledit système de commande est configuré pour fixer des vitesses de rotation respectives de chaque moteur (38, 46) de sorte que :
- l'arbre de commande (41) et l'arbre de transmission (36) tournent à la même vitesse angulaire autour du premier axe (X) lorsqu'un mouvement de la plaque principale (20) est requis avec une excentricité stationnaire ; et/ou de sorte que
- l'arbre de commande (41) et l'arbre de transmission (36) tournent à des vitesses angulaires différentes pendant une durée prédéterminée étant suffisante pour varier l'excentricité de la trajectoire de la plaque principale (20) autour du premier axe (X), les vitesses angulaires de l'arbre de commande (41) et de l'arbre de transmission (36) étant ensuite ramenées à une valeur équivalente lorsque l'excentricité désirée a été atteinte.

14. Machine selon la revendication 13, dans laquelle ledit système de commande comprend de plus, pour chacun desdits moteurs (38, 46), un détecteur (45) de position angulaire configuré pour détecter le positionnement angulaire absolu de chaque moteur (38, 46), et dans laquelle ledit système de commande est configuré pour calculer, sur la base des valeurs de position angulaire (45) détectées par chaque détecteur, une valeur de position angulaire (45) réciproque entre l'arbre de commande (41) et l'arbre de transmission (36) et/ou l'excentricité de la trajectoire de la plaque principale (20).
